# EUROPEAN PATENT SPECIFICATION

(11) **EP 0 635 206 B1**
(45) Date of publication and mention of the grant of the patent: **28.06.2000**
(21) Application number: 94202044.7
(22) Date of filing: 14.07.1994
(51) Int. Cl.: A01K 1/01, A01K 1/12

(54) **A construction for automatically milking animals**
Vorrichtung zum automatischen Melken von Tieren
Dispositif de traite automatique d'animaux

(30) Priority: 19.07.1993 NL 9301261
(43) Date of publication of application: 25.01.1995
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- FR-A- 1 306 778
- FR-A- 2 099 264
- FR-A- 2 466 189
- FR-A- 2 519 514
- GB-A- 2 119 622

## Description

The present invention relates to a construction for automatically milking animals, such as cows, comprising a milking robot and floors, on which the animals are allowed to move about freely.

Such construction is known from EP-A-0 622 019.

In the above construction, the animals are allowed to move about freely. The droppings of the animals will be spread over a major surface area of the construction. In the construction this can give rise to a considerable emission of ammonia, which is undesirable from environmental and hygienic viewpoints. It is known per se to use dung scrapers to clean the surface of the construction. In document FR-A-2 099 264 there is described and drawn a dung scraper which can be moved along the floor of a shed in two directions by means of a chain which is connected with an electric motor. The scraper comprises a scraper blade which is moved along the floor from one end of the shed to the other end of the shed, where the collected mest is dropped into a receptacle. Such a scraper have the disadvantage that a groof must be arranged in the floor to put away the chain so that the chain forms no obstacle for the animals. Another disadvantage of such a scraper blade is that it collects all the manure over the whole length of the shed which can result in that manure will run over the scraper blade. Furthermore, the manure is taken along the whole floor before it is dropped into a receptacle.

The objective of the invention is to obviate these drawbacks or to reduce it to a large extent. Therefore, the construction according to the invention is characterized in that the construction comprises a plurality of milking parlours which are also arranged as resting boxes and/or feeding boxes, while furthermore there is provided a cross conveyor which is movable along the floors for removal of manure over the floors in two different directions. Owing to the above facilities, the manure and/or urine can be rapidly carried off, so that the emission of ammonia is kept down to a minimum and both the environment and the health of the animals are burdened to a lesser degree. According to a further feature of the invention, the floor is provided with a coating preventing ammonia and ammonia-containing substances from penetrating thereinto.

According to still another feature of the invention, the construction comprises a space where the animals are allowed to move about freely, comprising a milking and resting place having an inclined floor, and also a loafing area provided with an equally inclined floor. Particularly the urine which arrives on the inclined floor will, rapidly and without the intermediary of auxiliary means, end up in the manure channel. As the evaporation surface in the manure channel is relatively small, the emission of ammonia is restricted. According to a further feature of the invention, behind the milking box or a feeding box there is provided a cross gutter for the removal of manure and/or urine. According to another feature of the invention, in the manure channel there is provided a longitudinal conveyor, through which the manure in the manure channel can be moved to, for instance, a manure storage tank situated outside the construction. As such a manure storage tank is generally shut off from the outside air, any further emission of ammonia cannot take place.

In a preferred embodiment of the invention, the construction comprises a loafing passage for the animals, while the cross conveyor for the removal of manure is placed transversely to the loafing passage. Manure and/or urine can be rapidly carried off to the manure channel by means of this cross conveyor, which causes that the surface area of emission and the time during which emission can take place are limited.

In a preferred embodiment of the invention, the longitudinal conveyor placed in the manure channel comprises a frame, moving to and fro in the longitudinal direction of the passage for the animals, while a cross conveyor for the removal of manure is placed transversely to the loafing passage. Manure and/or urine can be rapidly carried off to the manure channel by means of this cross conveyor, which causes that the surface area of emission and the time during which emission can take place are limited.

In a preferred embodiment of the invention, the longitudinal conveyor placed in the manure channel comprises a frame, moving to and fro in the longitudinal direction of the manure channel, on which frame there are provided carriers pivotable about a virtually vertical shaft, which carriers are provided with a stop which bears on the frame when the frame is moved in a first direction, while, in the event that the frame is moved in a second direction, which is opposite to the first direction, these carriers pivot about the virtually vertical shaft to the point where they come to rest against the frame. Thus, the manure present in the manure channel is unidirectionally carried off by the carriers. According to a further feature of the invention, the longitudinal conveyor is coupled to an eccentric drive.

To elucidate the invention, an exemplary embodiment of the invention will now be further explained with reference to the accompanying drawings, in which:
Figure 1 is a plan view of a shed comprising two rows of resting boxes;
Figure 2 is a cross-section of the shed taken along the line II-II in Figure 1, where each row of resting boxes is provided with a milking robot and a concentrates dispensing system;
Figure 3 is a cross-sectional view of a resting box and a milking robot taken along the line III-III in Figure 1;
Figure 4 is a rear view of the resting box, as indicated by the arrow IV in Figure 3;
Figure 5 shows a plan view of a plurality of resting boxes, as indicated by the arrow V in Figure 3;
Figure 6 is a side view of a cross conveyor for the removal of manure, as indicated by the arrow VI in Figure 1;
Figure 7 is a plan view of the cross conveyor for the removal of manure, as indicated by the arrow VII in Figure 6 and
Figure 8 shows enlarged a longitudinal conveyor for the removal of manure in the manure channel of Figure 1.

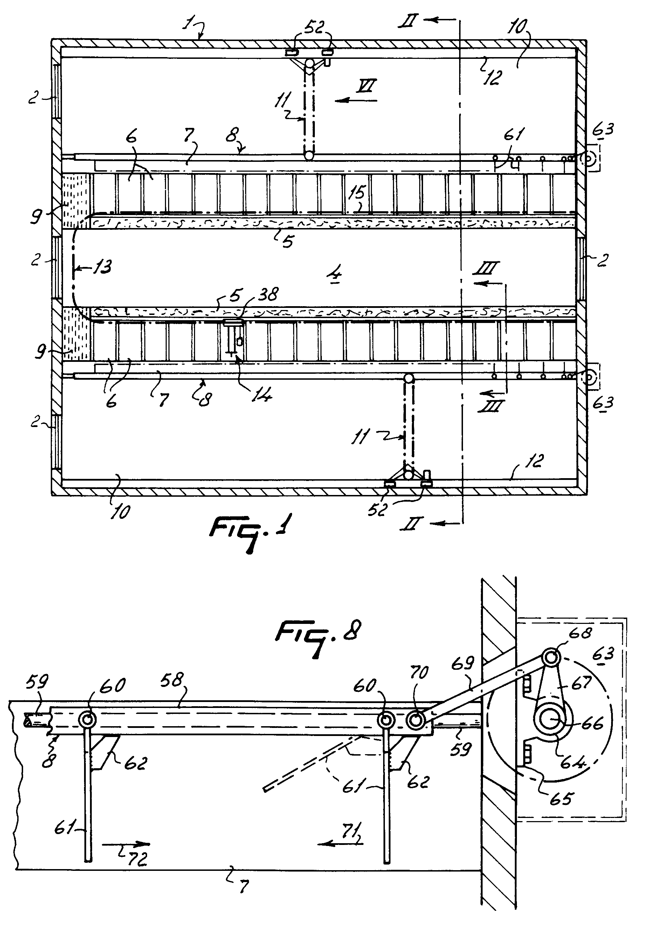

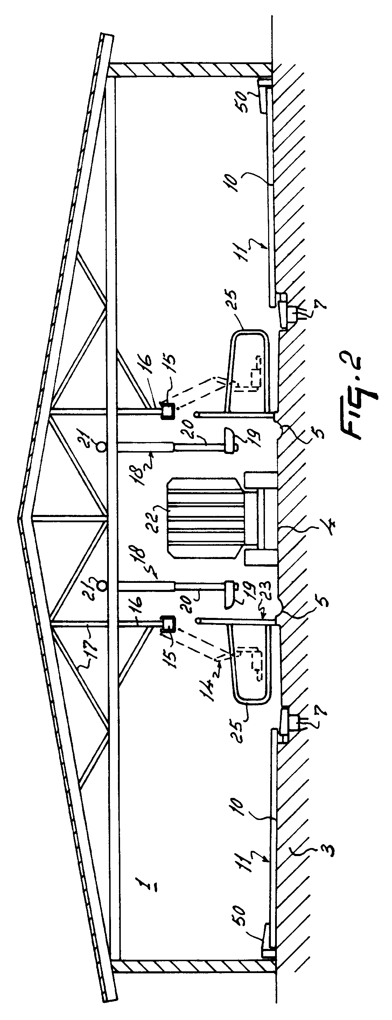

In Figure 1, the plan view shows a shed 1 provided with doors 2 and a floor 3. A feeding passage 4 with, on either side, a long feed trough 5 (Figure 2) extending over the full shed length is centrally arranged in the cow shed 1. On either side of the feeding passage 4 there is provided a row of resting boxes which may be used as places for the animals to rest, to be milked and to be fed. As is shown in Figures 1 and 2, at the rear side of each row of resting boxes 6 there is provided a manure channel 7 equipped with a conveyor 8 capable of removing unidirectionally the manure present in the manure channel 7. On one end of each row of resting boxes 6 is a receptacle 9 to store the manure removed by the longitudinal conveyor 8. The receptacle 9 has a connection with a manure storage pit - not shown. Behind each row of resting boxes there is also a loafing passage 10, on which the animals are allowed to move about freely. The floor 3 of the loafing passages 10 and the resting boxes 6 are inclined slightly downward in the direction of the manure channels 7. The angle of inclination of the floor 3 is preferably 1 to 2°. The floor is treated with a coating which prevents ammonia or ammonia-containing substances from penetrating into the floor 3.

Arranged transversely to each loafing passage 10, a cross conveyor 11 is to remove any manure and/or urine from the loafing passage 10 into the manure channel 7. The cross conveyor 11 is capable of travelling to and fro in the longitudinal direction of the shed 1 on a rail 12 installed near either outer wall of the shed 1.

In the shed 1, there is also provided a U-shaped robot line 13, along which a milking robot 14 is movable. The legs of the U-shaped robot line 13 extend along the front side of the resting boxes 6. As is indicated in Figure 2, the robot line 13 comprises a beam 15 fastened to the roof truss 17 of the shed 1 by means of supports 16. The beam 15 is suspended about two metres from the floor 3. Furthermore, near the front of each resting box 6, there is provided a concentrates feeding system 18, through which the animals having taken their places in resting boxes 6 can be individually given concentrates, such as pellets. The concentrates feeding system 18 comprises for each resting box a feed trough 19 arranged on a "periscope-like" telescoping tube 20. The telescoping tubes 20 are attached to the roof truss 17 and connected to a supply line 21 for the supply of concentrated-feed pellets from a storage room - not shown. The "periscope-like" telescoping tube 20 is capable of moving each feed trough vertically and of pivoting each feed trough 19 on a vertical shaft. For depositing roughage in the long feed troughs 5, e.g. by means of a silage waggon 22, the feed troughs may be temporarily raised, so as that not to interfere with the supply of roughage into the long feed troughs 5.

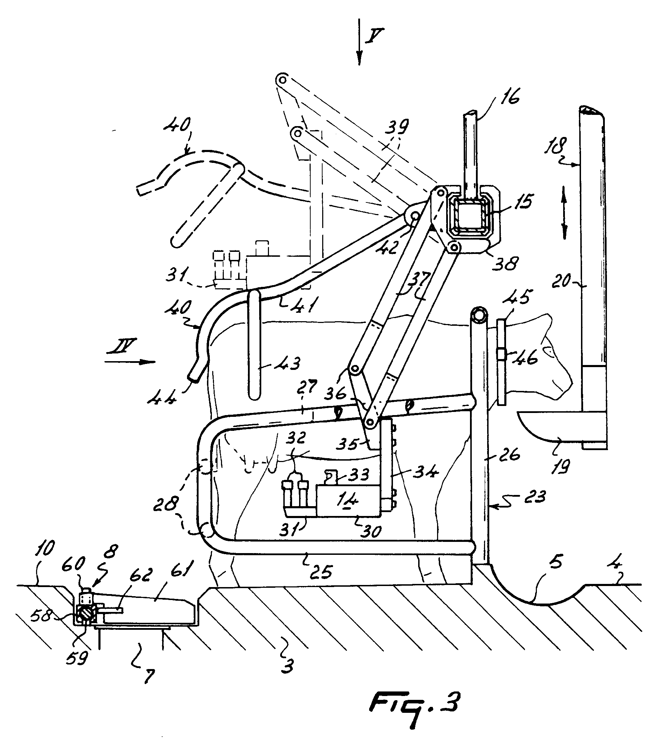

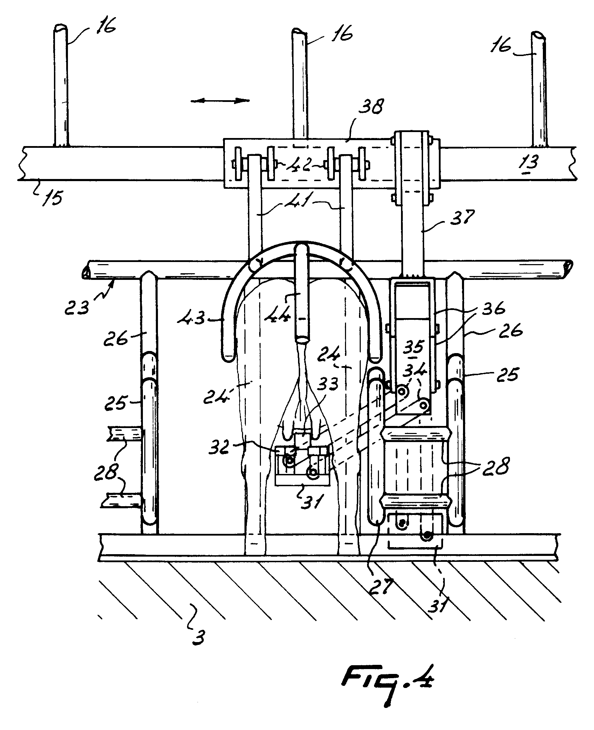

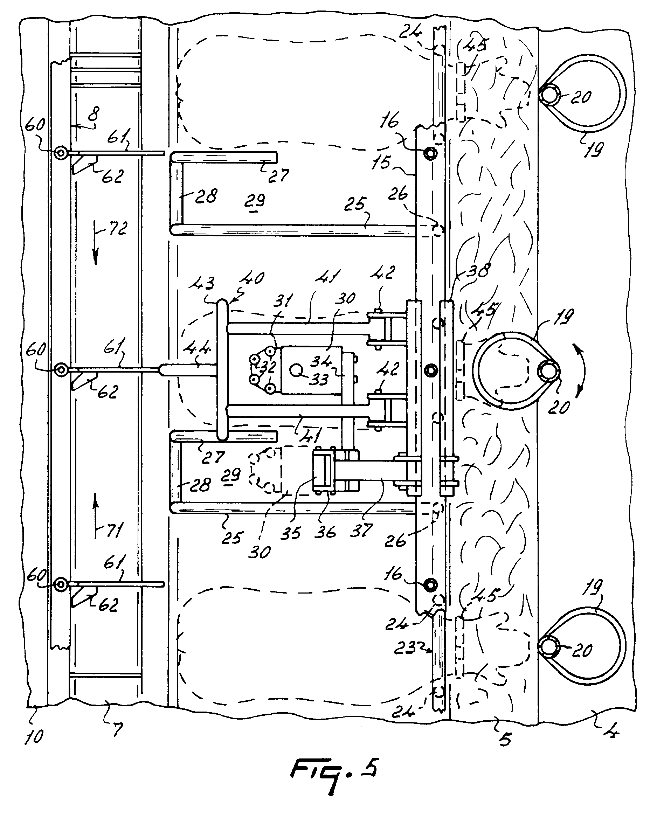

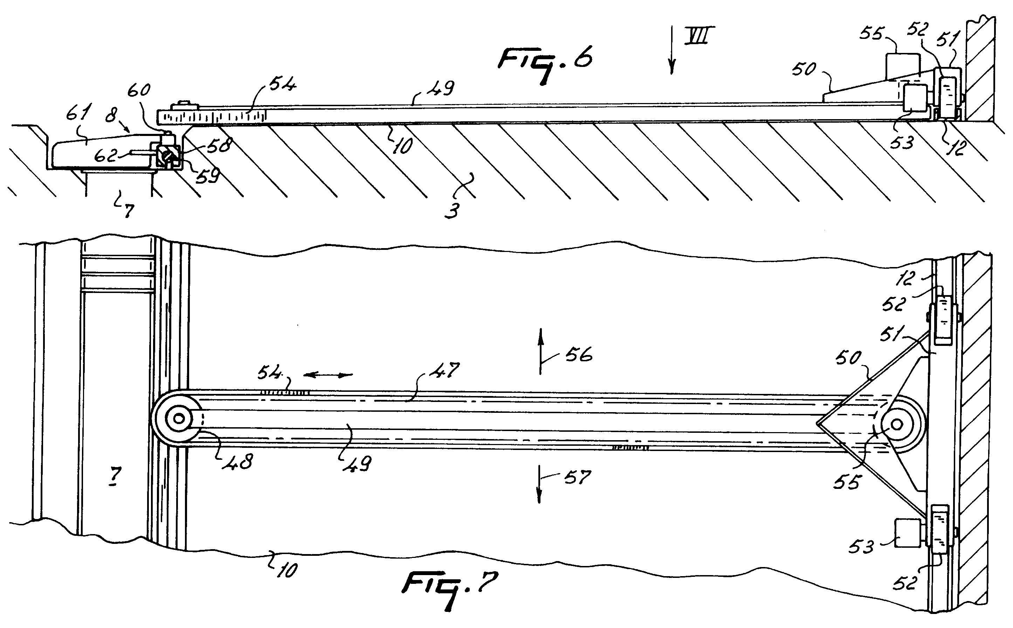

Figures 3 - 5 show in detail in which way the milking robot 14 milks the cows in the resting box(es) 6. Each resting box 6 comprises a rectangular tubular frame 23, which constitutes the front of a resting box 6. Two vertical tubes 24 are arranged at a certain distance from each other near the centre of the tubular frame 23 in such a way that the interspace allows the head of an animal to reach a long feed trough 5 and a feed trough 19. Each resting box 6 also comprises two U-shaped side walls 25 which connect with the posts 26 of the tubular frame 23. Near the end, a second U-shaped frame 27 mounted on one of the U-shaped side walls 25 of a resting box 6 by means of two horizontal connecting rods 28, is disposed at a certain distance from and parallel to the U-shaped side wall 25. The second U-shaped frame 27 extends from the rear side of the resting box 6 to approximately halfway the resting box 6. In the space 29 (Figure 5) thus created by the parallel frames 25 and 27, the milking robot 14 is allowed to swivel in a vertical plane, without causing there any trouble to an animal which has taken its place in a relevant resting box 6. As is reflected in Figure 3, the milking robot 14 comprises a robot arm 30 having on its end a robot head 31 equipped with teat cups 32. In addition, the robot head 31 comprises a detection sensor 33 which enables to determine e.g. the positions of the teats of an animal to be milked. The robot head 31 is capable of being moved in a horizontal plane by means of a first quadrangular hinge mechanism 34, one end of which is connected to the robot arm 30 and the other end to a supporting plate 35. Furthermore, the supporting plate 35 is provided with two lugs 36 connected with the arms of a second quadrangular hinge mechanism 37. The other end of the second quadrangular hinge mechanism 37 is connected with a U-shaped sleeve 38 slidable on the beam 15 of the robot line 13. The milking robot 14 can swivel in a vertical plane by means of the second quadrangular hinge mechanism 37, so that in the event that the milking robot 14 is moved along the beam 14 to a certain resting box 6, the milking robot 14 is capable of being swivelled upwards by means of the quadrangular hinge mechanism 37, as is indicated by dashed lines 39 in Figure 3. When the relevant resting box 6 has been reached, the milking robot 14 can be swivelled in the space 29 of a milking box 6 by means of the second quadrangular hinge mechanism 37, whereupon the robot head 31 can be swivelled, by means of the first quadrangular hinge mechanism, to a position under the udder of an animal to be milked. The positions of the teats are determined by means of the detection sensor 33, whereupon the teat cups are automatically connected to the teats of the animal concerned.

On the sleeve 38, next to the milking robot 14, there is provided a positioning construction 40, by means of which an animal in a resting box 6 is restricted in its freedom of motion both in rearward and in sideward direction. The positioning construction 40 comprises two arms 41 which are disposed on the sleeve 38, rotatably mounted on a horizontal shaft 42. The two arms 41 are at a certain distance from each other and their ends are interconnected by an arc-shaped brace 43 which, in a rear view of a resting box 6, extends transversely to the longitudinal direction of the resting box 6. The arc-shaped brace 43 has a diameter which roughly corresponds with the width of a full-grown cow. Near the centre of the arc-shaped brace 43, a bent tube 44 extending obliquely rearwards and downwards in the longitudinal direction of the resting box 6 is provided and, when the cow has been positioned, is in contact with the rear part of the animal. The brace 43 and the tube 44 thus constitute a tripod positioning construction which is pivotable in a vertical plane on the horizontal shafts 42. During the milking robot 14 motion along the robot line 13, both the milking robot 14 and the positioning construction 40 are swung up.

The operation of the above-described construction will be explained below.

Every animal present in the shed 1 is provided with a collar 45 bearing a transmitter 46, by means of which transmitter the identity of the relevant cow can be transmitted to a computer - not shown - provided with a cow recognition system. Through the computer it is recorded which animal has been milked at a certain time by means of the milking robot 14 and how much time has lapsed since then. On the basis of the time elapsed since a milking, the computer can determine which animal in the herd was milked the longest time ago. If the relevant animal is in or near a resting box 6, it will be attempted to milk the animal by means of the milking robot 14. In the event that the relevant animal is in a resting box 6, the milking robot 14 is moved along the robot line 13 to the respective resting box 6, and the animal is limited in its freedom of motion in the resting box by means of the tripod positioning construction 40. At the same time or subsequently, the feed trough 19 arranged near the front of the relevant resting box 6 is turned to the animal (Figure 5) and the animal is given a predetermined amount of concentrated feed by the concentrates dispensing system. Subsequently, the milking robot 14 is swung down from the raised position and the milking robot head 31 is moved to underneath the animal, whereupon the teat cups 32 can be connected to the teats. Subsequently, automatic milking can start, while the teat cups are disconnected on completion of the milking and the milking robot 14 is again put into the raised position then. Subsequently, the positioning construction 40 is also swung up and the feed trough 19 is turned away from the animal. After this, the milking robot 14 can be moved along the robot line to an other animal to be milked.

If the animal is not in a position appropriate for milking in a resting box 6 - which means that the animal, for instance, lies in the resting box 6 or is in the vicinity of the resting box 6 -, then the feed trough 19 is put into position by means of the concentrates dispensing system 18 and concentrated feed is thrown into the feed trough 19. Because the throwing of concentrates into the feed trough 19 is accompanied by noise, this will usually be noticed by the animal, whereupon the animal will get up and go to the feed trough 19 where the animal can subsequently be milked. If an animal remains lying in the resting box 6 after concentrated feed has been supplied through the concentrates dispensing system 18, the animal can be stimulated to get up by touching the animal with the positioning construction 40.

In the Figures 6 and 7, the cross conveyor 11 of Figure 1 is shown enlarged and more detailed. The cross conveyor 11 covers the full width of the loafing area in the cow-shed 1, while one end of the cross conveyor 11 projects above the manure channel 7. The cross conveyor 11 comprises a looped chain 47 which is mounted on gearwheels 48 at the two ends of the cross conveyor 11 (Figure 7). The two gearwheels 48 are interconnected by an intermediate beam 49, of which one end is connected with a V-shaped frame 50. The two legs of the V-shaped frame 50 are interconnected by a horizontal U-shaped strip 51, whose both ends are provided with roller pair members 52, by means of which the cross conveyor 11 can be moved to and fro along the rail 12 in the longitudinal direction of the shed 1. For this purpose, one roller member 52 is driven by a motor 53, which is an electric motor in the exemplary embodiment of the invention. The chain 47 has on its bottom side bristles 54 which bear on the floor 3 of the loafing area in the shed 1. Through the gearwheel 48 situated near the V-shaped frame 50, the chain 47 is driven by a second motor 55 which is also in the form of an electric motor.

If the cross conveyor 11 is moved in the direction indicated by arrow 56 in Figure 7, the second electric motor 55 drives the chain 47 counter-clockwise, so that the manure and/or other dirt present on the floor 3 of the loafing area in the shed 1 is carried off in the direction of the manure channel 7. When the cross conveyor has reached the end of the shed 1, the electric motor 53 is automatically changed over, so that the cross conveyor 11 moves in the opposite direction, as is indicated by arrow 57 in Figure 7. The first electric motor 53 is simultaneously changed over, so that the chain 47, too, is turned clockwise instead of counter-clockwise, so that also in the event that the cross conveyor 11 is moved in the direction of arrow 57 the manure is carried into the manure channel 7.

In Figure 8, the longitudinal conveyor 8 of Figure 1 is shown enlarged and more detailed. The longitudinal conveyor 8 comprises a U-shaped frame beam 58 slidably mounted on a rail 59 which is placed on the bottom of the U-shaped manure channel 7 and extends along a side wall of this manure channel 7. On the U-shaped frame beam 58 and at a certain mutual distance there are provided two upright shafts 60 with bearing-mounted rotatable carriers 61 around them. On one side, the carriers 61 are provided with a stop 62 which can bear on the side of the U-shaped frame beam 58. In the exemplary embodiment of the invention, the carriers are made of steel and on their bottom side they are provided with a rubber strip bearing on the bottom of the manure channel 7. It will be obvious that the carriers 61 may also be completely made of plastic or metal or any other type of material.

Arranged near an end of the U-shaped beam 58 there is an eccentric drive 63, by means of which the U-shaped frame beam 58 can be moved to and fro on the rail 59. The eccentric drive 63 comprises an electric motor 64 attached to the outer wall of the shed 1 by means of a support 65. An arm 67 with an upright shaft 68 on its end is arranged on the drive shaft 66 of the electric motor 64. A pivotable drag link 69 embracing the upright shaft 68 is pivotably connected with an upright shaft 70 fitted on the U-shaped frame beam 58.

The operation of the longitudinal conveyor 8 is as follows:

When the electric motor 64 is energized, the eccentric drive 63 moves the U-shaped frame beam 58 to and fro along the rail 59 in the direction of the arrows 71 and 72 in Figure 8. When the U-shaped frame beam 58 is moved in the direction of the arrow 71, the carriers 61 will bear on the U-shaped frame beam 58 through the stops 62, and any manure and/or other dirt present in front of the carriers 61 is removed in the direction of the arrow 71. When the direction of motion by the U-shaped frame beam 58 is reversed and is in the direction of the arrow 72, the friction between the bottom of the manure channel 7 and the carriers 61 will cause the carriers 61 to rotate on the shaft 60 until the instant that they come to bear on the U-shaped frame beam 58. It will be obvious that the carriers 61 do not displace any manure when the U-shaped frame beam 58 moves in the direction of the arrow 72 in Figure 8. Because the U-shaped frame beam 58 is then moved again in the direction of the arrow 71, the carriers 61 rotate and come again to bear on the U-shaped frame beam 58 through the stops 62, whereupon manure or other dirt is again pushed up in the direction of the arrow 71. In this way, the manure and/or dirt is stepwise driven up in one direction, towards the end of the manure channel 7, where it is caught in a receptacle 9 for subsequent transportation, for instance, to a manure storage space outside the shed.

## Claims

1. A construction for automatically milking animals, such as cows, comprising a milking robot (14) and floors (3), on which the animals are allowed to move about freely, characterized in that the construction comprises a plurality of milking parlours which are also arranged as resting boxes (6) and/or feeding boxes, while furthermore there is provided a cross conveyor (11) which is movable along the floors (3) for removal of manure over the floors (3) in two different directions (56, 57).

2. A construction according to claim 1, characterized in that the floor (3) is provided with a coating preventing ammonia and ammonia-containing substances from penetrating thereinto.

3. A construction according to claim 1 or 2, characterized in that the space where the animals are allowed to move about freely comprises a milking and resting place having an inclined floor (3), and/or a loafing area (10) provided with an inclined floor (3).

4. A construction according to any one of the preceding claims, characterized in that a manure channel (7) for the removal of manure and/or urine is provided behind a milking box or a feeding box.

5. A construction according to claim 4, characterized in that in the manure channel (7) there is provided a longitudinal conveyor (8), through which the manure in the manure channel (7) can be moved.

6. A construction according to any one of the preceding claims, characterized in that it comprises a loafing passage (10) for the animals, while the cross conveyor (11) for manure removal is arranged transversely to the loafing passage (10).

7. A construction according to claim 6, characterized in that the cross conveyor (11) comprises a conveyor chain (47).

8. A construction according to claim 7, characterized in that the conveyor chain (47) is provided with brushes (54).

9. A construction according to claim 7 or 8, characterized in that the conveyor chain (47) is driven by an electric motor (55).

10. A construction according to claim 7, 8 or 9, characterized in that the conveyor chain (47) is capable of being driven in two opposite directions of motion.

11. A construction according to any one of claims 6 to 10, characterized in that the cross conveyor (11) is bidirectionally movable in the longitudinal direction of the shed (1).

12. A construction according to any one of the preceding claims, characterized in that the longitudinal conveyor (8) comprises a frame (58), moving to and fro in the longitudinal direction of the manure channel (7), on which frame (58) there are provided carriers (61) pivotable about a virtually vertical shaft.

13. A construction according to claim 12, characterized in that the longitudinal conveyor (8) is coupled to an eccentric drive (63).

14. A construction according to claim 13, characterized in that the carriers (61) are provided with a stop (62) which bears on the frame (58) when the frame (58) is moved in a first direction, while, in the event that the frame (58) is moved in a second direction, which is opposite to the first direction, these carriers (61) pivot about the virtually vertical shaft to the point where they come to rest against the frame (58).

15. A construction according to any one of the preceding claims, characterized in that the manure channel (7) has a width of approximately 50 cms.

## Patentansprüche

1. Vorrichtung zum automatischen Melken von Tieren, wie z. B. Kühen, mit einem Melkroboter (14) sowie Böden (3), auf denen sich die Tiere frei bewegen können,
dadurch gekennzeichnet, daß die Vorrichtung mehrere Melkstände aufweist, die auch als Ruheboxen (6) und/oder Fütterungsboxen dienen, wobei ferner ein Quer-förderer (11) vorgesehen ist, der auf den Böden (3) bewegbar ist, um Dung über die Böden (3) in zwei unterschiedlichen Richtungen (56, 57) abzuführen.

2. Vorrichtung nach Anspruch 1,
dadurch gekennzeichnet, daß der Boden (3) eine Beschichtung aufweist, die verhindert, daß Ammoniak und ammoniakhaltige Substanzen in den Boden eindringen.

3. Vorrichtung nach Anspruch 1 oder 2,
dadurch gekennzeichnet, daß der Raum, in dem sich die Tiere frei bewegen können, einen Melk- und Ruheplatz mit einem geneigten Boden (3) und/oder einen Laufbereich (10) mit einem geneigten Boden (3) aufweist.

4. Vorrichtung nach einem der vorhergehenden Ansprüche,
dadurch gekennzeichnet, daß eine Dungrinne (7) zum Abführen von Dung und/oder Urin hinter einer Melkbox oder einer Fütterungsbox angeordnet ist.

5. Vorrichtung nach Anspruch 4,
dadurch gekennzeichnet, daß in der Dungrinne (7) ein Längsförderer (8) angeordnet ist, durch den der Dung in der Dungrinne (7) bewegbar ist.

6. Vorrichtung nach einem der vorhergehenden Ansprüche,
dadurch gekennzeichnet, daß ein Laufbereich (10) für die Tiere vorgesehen ist, wobei der Querförderer (11) zur Entfernung von Dung quer zum Laufbereich (10) angeordnet ist.

7. Vorrichtung nach Anspruch 6,
dadurch gekennzeichnet, daß der Querförderer (11) eine Förderkette (47) aufweist.

8. Vorrichtung nach Anspruch 7,
dadurch gekennzeichnet, daß die Förderkette (47) mit Borsten (54) versehen ist.

9. Vorrichtung nach Anspruch 7 oder 8,
dadurch gekennzeichnet, daß die Förderkette (47) von einem Elektromotor (55) angetrieben ist.

10. Vorrichtung nach Anspruch 7, 8 oder 9,
dadurch gekennzeichnet, daß die Förderkette (47) in zwei entgegengesetzten Bewegungsrichtungen antreibbar ist.

11. Vorrichtung nach einem der Ansprüche 6 bis 10,
dadurch gekennzeichnet, daß der Querförderer (11) in Längsrichtung des stalles (1) in zwei Richtungen bewegbar ist.

12. Vorrichtung nach einem der vorhergehenden Ansprüche,
dadurch gekennzeichnet, daß der Längsförderer (8) einen sich in Längsrichtung der Dungrinne (7) hin- und herbewegenden Rahmen (58) umfaßt, an dem Schaufeln (61) angeordnet sind, die um eine praktisch vertikale Achse drehbar sind.

13. Vorrichtung nach Anspruch 12,
dadurch gekennzeichnet, daß der Längsförderer (8) mit einem Exzenterantrieb (63) verbunden ist.

14. Vorrichtung nach Anspruch 13,
dadurch gekennzeichnet, daß die Schaufeln (61) einen Anschlag (62) aufweisen, der an dem Rahmen (58) anliegt, wenn der Rahmen (58) in einer ersten Richtung bewegt wird, während sich diese Schaufeln (61) beim Bewegen des Rahmens (58) in einer zweiten, zur ersten Richtung entgegengesetzten Richtung um die praktisch vertikale Achse bis zu dem Punkt drehen, an dem sie am Rahmen (58) zur Anlage kommen.

15. Vorrichtung nach einem der vorhergehenden Ansprüche,
dadurch gekennzeichnet, daß die Dungrinne (7) einen Breite von etwa 50 cm hat.

## Revendications

1. Installation pour la traite automatique d'animaux, tels que des vaches, comportant un robot de traite (14) et des sols (3), sur lesquels les animaux peuvent se déplacer à peu près librement, caractérisé en ce que l'installation comporte une pluralité de box de traite qui sont également agencés comme des box de repos (6) et/ou des box d'alimentation, alors qu'un convoyeur transversal (11) qui est mobile le long des sols (3) pour déplacer du fumier situé sur les sols (3) dans deux directions différentes (56, 57).

2. Installation selon la revendication 1, caractérisée en ce que le sol (3) est muni d'un revêtement empêchant l'ammoniaque et des substances contenant de l'ammoniaque de pénétrer à l'intérieur de celui-ci.

3. Installation selon la revendication 1 ou 2, caractérisée en ce que l'espace où les animaux peuvent se déplacer à peu près librement comporte un emplacement de traite et de repos ayant un sol incliné (3), et/ou une zone de flânerie (10) munie d'un sol incliné (3).

4. Installation selon l'une quelconque des revendications précédentes, caractérisée en ce qu'un canal à fumier (7) destiné à déplacer du fumier et/ou de l'urine est agencé derrière un box de traite ou un box d'alimentation.

5. Installation selon la revendication 4, caractérisée en ce que le canal à fumier (7) est muni d'un convoyeur longitudinal (8) par l'intermédiaire duquel le fumier situé dans le canal à fumier (7) peut être déplacé.

6. Installation selon l'une quelconque des revendications précédentes, caractérisée en ce qu'elle comporte un passage de flânerie (10) pour les animaux, alors que le convoyeur transversal (11) pour le déplacement du fumier est agencé transversalement au passage de flânerie (10).

7. Installation selon la revendication 6, caractérisée en ce que le convoyeur transversal (11) comporte une chaîne de convoyeur (47).

8. Installation selon la revendication 7, caractérisée en ce que la chaîne de convoyeur (47) est munie de brosses (54).

9. Installation selon la revendication 7 ou 8, caractérisée en ce que la chaîne de convoyeur (47) est entraînée par un moteur électrique (55).

10. Installation selon la revendication 7, 8 ou 9, caractérisée en ce que la chaîne de convoyeur (47) peut être entraînée dans deux directions de déplacement opposées.

11. Installation selon l'une quelconque des revendications 6 à 10, caractérisée en ce que le convoyeur transversal (11) est mobile bidirectionnellement dans la direction longitudinale du hangar (1).

12. Installation selon l'une quelconque des revendications précédentes, caractérisée en ce que le convoyeur longitudinal (8) comporte un châssis (58) se déplaçant en va-et-vient dans la direction longitudinale du canal à fumier (7), châssis (58) sur lequel sont agencés des transporteurs (61) qui peuvent pivoter sur un arbre virtuellement vertical.

13. Installation selon la revendication 12, caractérisée en ce que le convoyeur longitudinal (8) est relié à une commande à excentrique (63).

14. Installation selon la revendication 13, caractérisée en ce que les transporteurs (61) sont munis d'une butée (62) qui appuie sur le châssis (58) quand le châssis (58) est déplacé dans une première direction, alors que, dans le cas où le châssis (58) est déplacé dans une seconde direction, qui est opposée à la première direction, ces transporteurs (61) pivotent autour d'un arbre virtuellement vertical vers l'emplacement où ils viennent appuyer contre le châssis (58).

15. Installation selon l'une quelconque des revendications précédentes, caractérisée en ce que le canal à fumier (7) a une largeur d'approximativement 50 cm.
